# EUROPÄISCHE PATENTSCHRIFT

(11) **EP 2 044 828 B1**
(45) Veröffentlichungstag und Bekanntmachung des Hinweises auf die Patenterteilung: **27.10.2010**
(21) Anmeldenummer: 08016932.9
(22) Anmeldetag: 26.09.2008
(51) Int. Cl.: A01C 7/10, A01C 7/04

(54) **Vorrichtung zum Zählen und/oder Erfassen kleiner Körperchen**
Device for counting and/or detecting small bodies
Dispositif de comptage et/ou de détection de petits corps

(30) Priorität: 02.10.2007 DE 102007047285
(43) Veröffentlichungstag der Anmeldung: 08.04.2009
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Kötter, Heiner, 49086 Osnabrück (DE); Götzen, Nils, 47506 Neukirchen-Vluyn (DE); Wiebusch, Thorsten, 49205 Hasbergen (DE)

(56) Entgegenhaltungen:
- EP-A- 1 704 764
- DE-A1-102004 045 655
- DE-A1-102007 031 576
- US-A- 3 533 535

## Beschreibung

Die Erfindung betrifft eine Vorrichtung des Oberbegriffes des Patentanspruches 1.

Eine derartige Vorrichtung zum Zählen und/oder Erfassen kleiner ist durch die DE 10 2004 045 655 A1 bekannt. Diese Vorrichtungen werden beim Zählen von Saatkörnern, die von dem Vereinzelungsorgan einer Einzelkornsämaschine vereinzelt werden, eingesetzt. Derartige Körner werden in vereinzelter Weise mit Abstand miteinander über Saatleitungen von den Vereinzelungsorganen zu Saatgutablegeeinrichtungen transportiert. Hierbei passieren die vereinzelten Samenkörner einen Leitungsbereich, in dem in einem Gehäuse die Sensorelemente der Vorrichtung angeordnet sind. Diese die Sensorelemente enthaltenden Gehäuse sind als Einzelgehäuse ausgebildet und auf den Leitungen zwischen dem Gehäuse des Vereinzelungsorgans und den Saatgutablagevorrichtungen angeordnet. Die Gehäuse, in denen die Sensorelemente zum Zählen und Erfassen kleiner Körperchen angeordnet sind, weisen eine bestimmte Größe auf und müssen zusätzlich in einem separaten Arbeitsvorgang auf den Leitungen angeordnet werden. Vielfach verrutschen die Gehäuse mit den Sensorelementen auf den Leitungen, wenn sie nicht ausreichend auf den Leitungen fixiert sind. Hierbei können dann die Sensorelemente in einem Bereich der Leitungen gelangen, der von den Lichtstrahlen der Sensorelemente nicht ausreichend durchdrungen werden kann.

Der Erfindung liegt die Aufgabe zugrunde, in einfacher Weise zu gewährleisten, dass die Sensorelemente die die Samenkörner in dem Leitungsbereich, in dem die Erfassung und das Zählen der Körperchen durchgeführt werden soll, die Samenkörner erfassen können.

Diese Aufgabe wird erfindungsgemäß durch die kennzeichnenden Merkmale des Patentanspruches 1 gelöst. Infolge dieser Maßnahmen wird das Gehäuse, in dem sich die Sensorelemente befinden, als Teil des Mundstückes an dem die von dem Vereinzelungs- und/oder Dosierorgan zu den Saatgutablageeinrichtung führenden Leitungen in integrierter Weise angeordnet. Das Gehäuse, in dem die Sensorelemente angeordnet sind, bildet gleichzeitig den Flansch zur Befestigung des Mundstückes an dem Dosiergehäuse des Dosier- oder Vereinzelungsorgans, so dass sich eine sehr kompakte Ausgestaltung des Gehäuses für die Sensorelemente und eine sichere ortsfeste Befestigung des die Sensorelemente aufnehmenden Gehäuse gegenüber dem Leitungsbereich, in dem die Erfassung und das Zählen der kleinen Körperchen vorgenommen werden soll, gewährleistet ist. Das Mundstück bildet die Übergabestelle der von dem Dosier- und Vereinzelungsorgan dosierten oder vereinzelten Samenkörner in die von dem Vereinzelung- oder Dosierorgan zu den Saatgutablageeinrichtungen führenden Leitungen. Somit wird eine verbesserte, verrutschsichere und kompaktere Anordnung des die Sensorelemente aufnehmenden Gehäuses vorgeschlagen.

Eine besonders vorteilhafte Ausgestaltung des die Sensorelemente aufnehmenden Gehäuses wird dadurch erreicht, dass das Gehäuse und das Mundstück einstückig ausgebildet sind. Hierbei ist das Mundstück an dem die Sensorelemente aufnehmenden Gehäuse angeordnet. Somit ist das Mundstück in das die Sensorelemente aufnehmenden Gehäuse integriert.

Um das die Sensorelemente aufnehmenden Gehäuse und das Mundstück in einfacher Weise an dem Gehäuse der Dosier- und Vereinzelungsorgane anordnen zu können, ist vorgesehen, dass die Befestigungselemente zur Befestigung des Mundstückes als das die Sensorelemente aufnehmendes Gehäuse ausgebildet sind.

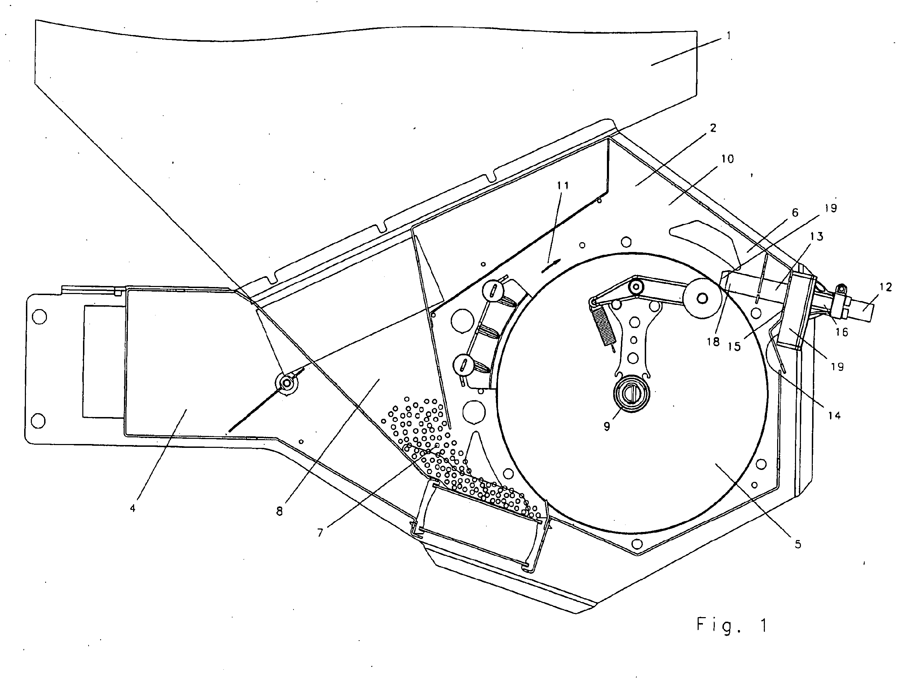

Weitere Einzelheiten der Erfindung sind der Beispielsbeschreibung und den Zeichnungen zu entnehmen. Hierbei zeigen
- Fig. 1: die Vereinzelungsvorrichtung der Einzelkornsämaschine in vereinfachter ausschnittsweiser Darstellung in Seitenansicht,

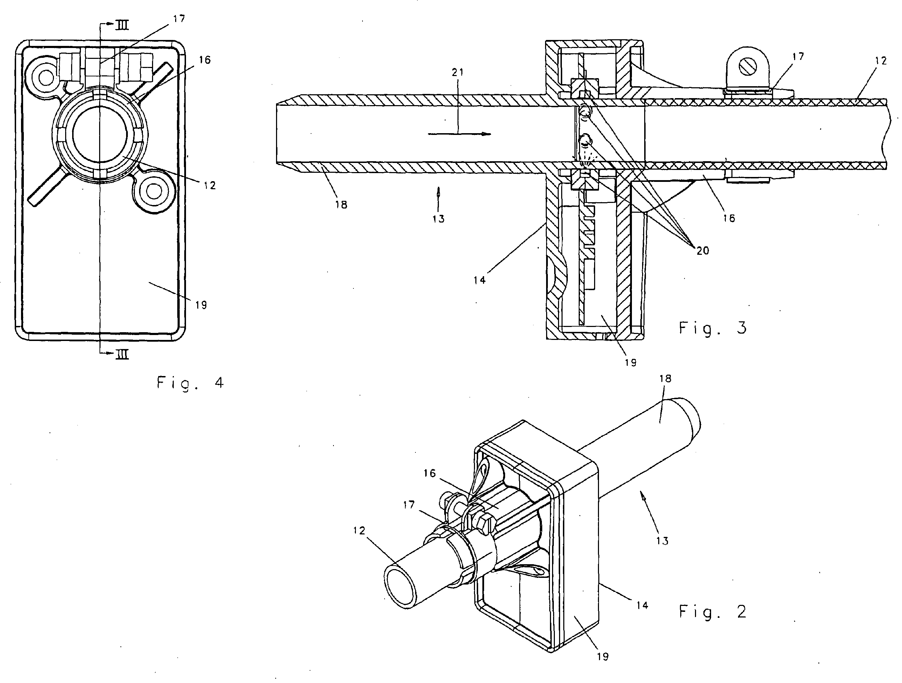

- Fig. 2: das Mündstück mit dem die Sensor aufnehmenden Gehäuse und der angeschlossenen Leitung in perspektivischer Darstellung,
- Fig. 3: das Mündstück mit dem die Sensor aufnehmenden Gehäuse und der angeschlossenen Leitung im Schnitt III - III und
- Fig. 4: das Gehäuse mit dem Mundstück in der Ansicht IV-IV.

Die Sämaschine weist den Vorratsbehälter 1 und die unterhalb des Vorratsbehälters 1 in einem Gehäuse 2 drehbar angeordnete und rotierend angetriebene Vereinzelungstrommel 3 auf. In der Umfangsfläche der Vereinzelungstrommel 3 sind in kreisförmig umlaufenden Perforationsreihen die nicht dargestellten Perforationen angeordnet. Der Vorratsbehälter 1 und das Gehäuse 2 oberhalb der Trommel 3 sind zumindest annähernd druckdicht mittels eines nicht dargestellten Deckels verschlossen. Über den Luftanschlusskasten 4 ist der Vorratsbehälter 1 und das Gehäuse 2 oberhalb der Trommel 3 durch das an den Anschlusskasten 4 angeschlossene und nicht dargestellte Druckluftgebläse mit Druckluft beaufschlagbar, so dass die Perforationsreihen mit einer Druckdifferenz zwischen dem Innenraum 7 der Vereinzelungstrommel 3 und dem Außenbereich 6 der Vereinzelungstrommel 3 beaufschlagt werden. Aufgrund dieser Druckdifferenz lagern sich an den Perforationen der Perforationsreihen der Vereinzelungstrommel 3, wenn diese durch den Saatgutvorrat 7, der sich aufgrund der Führung des Saatgutschachtes 8 bis unterhalb der Drehachse 9 der Trommel 3 erstreckt, Samenkörner an. Der Saatgutvorratsbehälter 1 bzw. das Gehäuse 2 unterhalb des Saatgutvorratsbehälters 1, in dem die Vereinzelungstrommel 3 drehend und abdichtend gelagert ist, weist die voneinander beabstandeten Seitenwände 10 auf, die sich parallel zur Bewegungsrichtung 11 der Trommel 3 erstrecken und mit der Trommel 3 zumindest annähernd abdichtend zusammenwirken.

Den Perforationsreihen sind zu als nicht dargestellten Säscharen ausgebildeten Ablagevorrichtungen führende Ausbringleitungen 12 zugeordnet. Die Ausbringleitungen 12 sind an Mundstücken 13 angeschlossen mittels eines Befestigungsflansches 14 an der Gehäusewandung 15 des Gehäuses 2, welche die Vereinzelungstrommel 3 luftdicht umschließt befestigt. Die Seitenwände 10 sind mit der Gehäusewandung 15 verbunden. Das Mundstück 13 weist auf der der Vereinzelungstrommel 3 abgewandten Seite 16 einen vergrößerten rohrförmigen Bereich auf, in welche die Ausbringleitung 12 eingeschoben und über eine auf das Ende 16 des Mundstückes 13 aufgesetzten Schlauchklemme 17 in dem Mundstück festgeklemmt wird. Der der Vereinzelungstrommel 3 zugewandte Bereich 18 des Mundstückes 13 weist einen Innendurchmesser auf, der zumindest annähernd dem Innendurchmesser der Ausbringleitung 12 entspricht.

An dem Flansch 14 des Mundstückes 13 schließt sich ein Gehäuse 19 an. Dieses Gehäuse 19 ist zur Aufnahme von Sensorelementen 20 zum Zählen oder Erfassen kleiner Körperchen, die das Mundstück 13 bzw. die Ausbringleitung 12 von der Vereinzelungstrommel 3 in Richtung 21 der Saatgutablageelemente passieren, ausgebildet. Das Gehäuse 19 und das Mundstück 13 sind einstückig ausgebildet, so dass das Mundstück 13 in das die Sensorelemente 20 aufnehmenden Gehäuse 19 integriert ist. Somit ist das Mundstück 13, in dem die Sensorelemente 20 aufnehmenden Gehäuse 19 angeordnet.

Das Mundstück 13 ist zumindest in dem Bereich in dem die Sensorelemente 20 angeordnet sind, aus einem durchleuchtbaren und/oder durchsichtigem Material hergestellt. Dadurch, dass das die Sensorelemente 20 aufnehmenden Gehäuse 19 an dem Flansch 14 des Mundstückes 13 angeordnet bzw. Bestandteil des Gehäuses 19 ist, ist das Befestigungselement zur Befestigung des Mundstückes und des die Sensorelemente aufnehmenden Gehäuses 19 ausgebildet. Das Gehäuse 19 ist über nicht dargestellte Befestigungsmittel, beispielsweise Schrauben oder Clipsverbindungen mit der Gehäusewandung 15 des Gehäuses 2 verbunden und somit an diesem angeordnet. Die Sensorelemente 20 sind beispielsweise als Lichtemitter und gegenüberliegende Lichtdetektoren ausgebildet. Die von dem Lichtemitter ausgesandten Lichtstrahlen durchdringen das Gehäuse 19 bzw. das Mundstück 13 in dem Bereich, in dem die Sensorelemente 20 angeordnet sind und somit die Saatleitung und den von den Samenkörnern passierten Bereich in Richtung 21 des zugeordneten Lichtdetektors. Beim Unterbrechen des Lichtstrahls vom Lichtemitter zum Lichtdetektor der Sensorelemente 20 entsteht beim Lichtdetektor, der beispielsweise als CCD-Element ausgebildet sein kann, ein Impuls, der von einer nicht dargestellten zugeordneten elektronischen Einrichtung ausgewertet wird. Aufgrund dieser ausgewerteten Signale der Sensorelemente 20 lässt sich die Vereinzelungsqualität der Vereinzelung und die Anzahl der ausgebrachten Samenkörner ermitteln und entsprechend in eine Steuer- oder Regelungseinrichtung, die beispielsweise von einem Bordcomputer vorgenommen werden kann, übermittelt.

## Patentansprüche

1. Vorrichtung zum Zählen und/oder Erfassen kleiner Körperchen, insbesondere der von den Dosier- und/oder Vereinzelungsorgan (3) einer Sämaschine, insbesondere Einzelkornsämaschine auszubringenden Samenkörner, die mittels Leitungen (12) von dem Dosier- und/oder Vereinzelungsorgan (3) zu ihrem Bestimmungsort transportiert werden und hierbei einen Leitungsbereich passieren, in dem in einem Gehäuse (19) die Sensorelemente (20) der Vorrichtung angeordnet sind, wobei die Leitungen (12) jeweils mit einem an dem Dosiergehäuse (2) des Dosier- und/oder Vereinzelungsorgans (3) mittels eines Befestigungselementes (14) befestigten Mundstück (13) an das Dosier- und/oder Vereinzelungsorgan (3) zur Entgegennahme der dosierten und/oder vereinzelten Samenkörner angeschlossen sind, wobei an dem Mundstück (13) und/oder den Befestigungselementen (14) des Mundstückes (13) ein Gehäuse (19) angeordnet ist, wobei in diesem Gehäuse (19) die Sensorelemente (20) angeordnet sind, **dadurch gekennzeichnet, dass** das Mundstück (13) zumindest in dem Bereich, in dem die Sensorelemente (20) angeordnet sind, aus einem durchleuchtbaren und/oder durchsichtigen Material besteht.

2. Vorrichtung nach Anspruch 1, **dadurch gekennzeichnet, dass** das Gehäuse (19) und das Mundstück (13) einstückig ausgebildet sind.

3. Vorrichtung nach Anspruch 1, **dadurch gekennzeichnet, dass** das Mundstück an dem die Sensorelemente (20) aufnehmenden Gehäuse (19) angeordnet ist.

4. Vorrichtung nach einem oder mehreren der vorstehenden Ansprüche, **dadurch gekennzeichnet, dass** das Mundstück (13) in das die Sensorelemente (20) aufnehmenden Gehäuse (19) integriert ist.

5. Vorrichtung nach einem oder mehreren der vorstehenden Ansprüche, **dadurch gekennzeichnet, dass** die Befestigungselemente (14) zur Befestigung des Mundstückes (13) als das die Sensorelemente (20) aufnehmendes Gehäuse (19) ausgebildet sind.

## Claims

1. Device for counting and/or detecting small bodies, in particular the seed grains which are to be discharged by the metering and/or separating member (3) of a seeder, in particular single grain seeder, are transported by means of lines (12) from the metering and/or separating member (3) to their destination and, in the process, pass through a line region in which the sensor elements (20) of the device are arranged in a housing (19), wherein the lines (12) are each connected by a mouthpiece (13), which is fastened to the metering housing (2) of the metering and/or separating member (3) by means of a fastening element (14), to the metering and/or separating member (3) to receive the metered and/or separated seed grains, wherein a housing (19) is arranged on the mouthpiece (13) and/or on the fastening elements (14) of the mouthpiece (13), and wherein the sensor elements (20) are arranged in said housing (19), **characterized in that** the mouthpiece (13) is composed of a transilluminable and/or transparent material at least in the region in which the sensor elements (20) are arranged.

2. Device according to Claim 1, **characterized in that** the housing (19) and the mouthpiece (13) are designed as a single piece.

3. Device according to Claim 1, **characterized in that** the mouthpiece is arranged on the housing (19) which receives the sensor elements (20).

4. Device according to one or more of the preceding claims, **characterized in that** the mouthpiece (13) is integrated into the housing (19) which receives the sensor elements (20).

5. Device according to one or more of the preceding claims, **characterized in that** the fastening elements (14) for fastening the mouthpiece (13) are designed as the housing (19) which receives the sensor elements (20).

## Revendications

1. Dispositif de comptage et/ou de détection de petites pièces, notamment des graines de semence à distribuer par un organe de dosage et/ou de séparation (3) d'un semoir, notamment d'un semoir de précision, ces graines de semence étant transportées par des conduites (12) de l'organe de dosage et/ou de séparation (3), vers leur destination et elles traversent ainsi une zone de guidage dans laquelle se trouve un boîtier (19) avec des éléments de capteur (20) du dispositif,
- les conduites (12) étant reliées respectivement à un embout (13) fixé au boîtier de dosage (2) de l'organe de dosage et/ou de séparation (3) par un élément de fixation (14) pour prélever les graines de semence dosées et/ou séparées,
- l'embout (13) et/ou les éléments de fixation (14) de l'embout (13) comportant un boîtier (19),
- le boîtier (19) logeant les éléments de capteur (20),
dispositif **caractérisé en ce qu'**
l'embout (13) est en une matière transparente et/ou translucide au moins dans la zone dans laquelle se trouvent les éléments de capteur (20).

2. Dispositif selon la revendication 1,
**caractérisé en ce que**
le boîtier (19) et l'embout (13) sont en une seule pièce.

3. Dispositif selon la revendication 1,
**caractérisé en ce que**
le boîtier (19) logeant les éléments de capteur (20) est prévu sur l'embout.

4. Dispositif selon l'une des revendications précédentes,
**caractérisé en ce que**
l'embout (13) est intégré dans le boîtier (19) logeant les éléments de capteur (20).

5. Dispositif selon l'une des revendications précédentes,
**caractérisé en ce que**
les éléments de fixation (14) servant à fixer l'embout (13) sont réalisés sous la forme du boîtier (19) logeant les éléments de capteur (20).
